# EUROPÄISCHE PATENTANMELDUNG

(11) **EP 4 120 508 A1**
(43) Veröffentlichungstag der Anmeldung: **18.01.2023**
(21) Anmeldenummer: 21185716.4
(22) Anmeldetag: 15.07.2021
(51) Int. Cl.: H02J 13/00, H02J 3/00, G06N 3/08, G06N 3/04

(54) **VERFAHREN UND ZENTRALE RECHNERANORDNUNG ZUR VORHERSAGE EINES NETZZUSTANDS SOWIE COMPUTERPROGRAMMPRODUKT**

(71) Anmelder: Siemens Aktiengesellschaft, 80333 München (DE)
(72) Erfinder: Henselmeyer, Sylwia, 91052 Erlangen (DE)

(57) **Zusammenfassung**

Die vorliegende Erfindung betrifft ein Verfahren zur Vorhersage eines Netzzustands eines elektrischen Energieverteilungsnetzes, bei dem
mittels einer zentralen Rechneranordnung (50) Messwerte von Messeinrichtungen empfangen werden, und
mittels einer Zustandsschätzungseinrichtung (54) eine Vorhersage eines zukünftigen Netzzustands durchgeführt wird, wobei anhand der Vorhersage des zukünftigen Netzzustands Maßnahmen zur Sicherstellung einer Stabilität des Energieverteilungsnetzes ermittelt werden, und wobei
die Vorhersage für mehrere Zeitpunkte innerhalb eines vorgegebenen Zeitfensters erfolgt,
dadurch gekennzeichnet, dass
mittels einer ersten Vorhersageeinrichtung (55) eine Vorhersage für einen ersten Teil der mehreren Zeitpunkte anhand eines Spannungs-Blindleistungs-Kontrollverfahrens ermittelt wird, und dass
mittels einer zweiten Vorhersageeinrichtung (56) eine Vorhersage für einen zweiten Teil der mehreren Zeitpunkte anhand eines Neuronalen-Netzwerk-Verfahrens ermittelt wird.

Ferner betrifft die Erfindung eine zentrale Rechneranordnung und ein Computerprogrammprodukt.

## Beschreibung

Die Erfindung betrifft ein Verfahren zur Vorhersage eines Netzzustands gemäß dem Oberbegriff des Anspruchs 1, eine zentrale Rechneranordnung zur Vorhersage eines Netzzustands gemäß dem Oberbegriff des Anspruchs 10 sowie ein Computerprogrammprodukt gemäß Anspruch 15.

Aus der Produktbroschüre "Intelligent control center technology - Spectrum Power", Siemens AG 2017, Article-No. EMDG-B90019-00-7600, ist eine Software für ein sog. "Supervisory Control and Data Acquisition (SCADA)" System, also eine Leitstelle, bekannt. SCADA Systeme sind zur Kontrolle und Steuerung von Energienetzen lange bekannt (Wikipedia permanenter link: https://en.wikipedia.org/w/index.php?title=SCADA&oldid=858433 181). Dabei werden Messwerte von Sensoren, beispielsweise von Spannungsmessgeräten und Strommessgeräten im Energienetz, aggregiert und zur Leistelle übermittelt. Zur Steuerung von Leistungsschaltern und Trennschaltern im Energienetz sowie zur Ansteuerung von Energieerzeugern wie Kraftwerken werden Steuerbefehle ins Energienetz gesendet. Diese Steuerbefehle werden von "Remote Terminal Units" (RTUs), "programmable logic controllers" (PLCs) und "intelligent devices" (IEDs) empfangen und verarbeitet, um die Leistungsschalter und die Trennschalter usw. anzusteuern. In der Leitstelle ist bisher häufig ein lokales Rechenzentrum vorgesehen, auf dem die Leitstellensoftware wie z.B. Spectrum Power läuft. Es werden rund um die Uhr Techniker in der Leitstelle bereitgehalten, die die Anzeigen des SCADA über den aktuellen Betriebszustand des Energienetzes kontrollieren und im Fehlerfall Gegenmaßnahmen wie z.B. die Abschaltung eines Netzabschnitts durchführen können. Die Leistellensoftware wird in der Regel in einer zentralen Rechneranordnung betrieben, die beispielsweise als ein Rechenzentrum mit Prozessoren, Datenspeichern und Bildschirmen ausgebildet sein kann. Der Begriff "zentral" zielt dabei darauf ab, dass alle Messdaten aus dem Energienetz und alle Steuerbefehle für das Energienetz zentral verarbeitet werden.

Als Begleiterscheinung einer immer weiteren Verbreitung von verteilter Energieerzeugung, also beispielsweise durch Photovoltaik-Anlagen oder Windkraftanlagen, wird durch die immer zahlreicheren lokalen Energieerzeuger, die in das Nieder- und Mittelspannungsnetz einspeisen, eine Vorhersage eines Systemzustands des Energienetzes erschwert. Auch die Abhängigkeit von Wettereinflüssen steigt, weil z.B. Solarzellen stark von der Bewölkung und Windkraftanlagen von der Windstärke beeinflusst werden. Diese Probleme wirken auch auf die nächsthöhere Spannungsebene eines Energieübertragungsnetzes der Hochspannungsebene zurück, das hierdurch schwieriger zu steuern und vorherzusagen ist.

Bisher werden in der Regel Last- und Erzeugungsprognosen und/oder Fahrpläne in Verbindung mit einem sog. "Distribution System Power Flow (DSPF)" eingesetzt, um einen zukünftigen Netzzustand abzuschätzen. Dabei verwendet DSPF statische Betriebsmitteldaten und lokale Vorhersagen für einen Energieverbrauch und eine Energieerzeugung sowie dynamische Topologie-Informationen (d.h., welche Leitungen zwischen den einzelnen Komponenten aktuell geschaltet sind), um einen prognostizierten Spannungsbetrag und Spannungswinkel an jedem Netzwerkabschnitt zu berechnen. Ein solcher Ansatz ist beispielsweise aus der Produktbroschüre "Spectrum Power Aktives Netzwerkmangement", Siemens AG 2016, EMFG-B10104-00, bekannt. Die technischen Grundlagen sind aus den Veröffentlichungen "Real-Time Distribution System State Estimation" von Dzafic et al., 2010 IEEE 978-1-4244-7398-4 und "Real-Time Estimation of Loads in Radial and Unsymmetrical Three-Phase Distribution Networks" von Dzafic et al., 2013 IEE 0885-8950, bekannt.

Netzbetreiber in Deutschland sind beispielsweise verpflichtet, Vorhersagen über eine vertikale Netzlast und über eine Einspeisung regenerativer Energie (von z.B. Photovoltaikanlagen, Biogasanlagen, Windkraftanlagen, Geothermieanlagen, usw.) für einen zukünftigen Zeitraum von 24 Stunden mit einer zeitlichen Auflösung von 15 Minuten bereit zu stellen. Anhand der Vorhersagen schätzen die Netzbetreiber den zukünftigen Netzzustand und ermitteln geeignete Maßnahmen zur Sicherung der Netzstabilität (d.h. Gegenmaßnahmen, um z.B. Grenzwertverletzungen für Spannung und Frequenz in einem Teilnetz zu verhindern). Beispielsweise soll ermittelt werden, ob und ggf. wann als Maßnahme in den nächsten 24 Stunden flexible Leistung zugekauft oder verkauft werden muss.

Diese Vorhersagen können beispielsweise mittels analytischer Algorithmen wie einer Zustandsschätzung ("state estimation") oder einem Spannungs-Blindleistungs-Kontrollverfahren ("Voltage Var Control (VVC)") für 96 Zeitpunkte, d.h., alle 15 Minuten für 24 Stunden in der Zukunft, ermittelt werden, wobei die Rechnung jeweils für jedes Verteilnetz separat vorgenommen wird. Dabei wird aber ständig eine hohe Rechenleistung benötigt, obwohl sich für die meisten Zeitpunkte die Ergebnisse schlussendlich kaum unterscheiden. Es hat sich im Modellversuch gezeigt, dass bei einem Modellnetz die Laufzeit einer Vorhersage für alle 96 Zeitpunkte in den nächsten 24 Stunden über 20 Minuten dauert. Dies ist zu lang, da ein aktuelles Ergebnis für die nächsten 24 Stunden vorliegen sollte, bevor das nächste 15 Minuten Intervall beginnt und eine neue Vorhersage für 24 Stunden benötigt wird. Dieses Problem könnte bisher nur durch einen massiven Ausbau der Rechenkapazität einer Leitstelle gelöst werden, indem z.B. neue Server mit leistungsstarken Prozessoren bereitgestellt werden. Dies ist jedoch teuer und steigert den Energieverbrauch der Leitstelle.

Ausgehend von bekannten Verfahren zur Vorhersage eines Netzzustands eines elektrischen Energieverteilungsnetzes stellt sich an die Erfindung die Aufgabe, ein Verfahren anzugeben, mit dem vergleichsweise einfach und schnell ein zukünftiger Systemzustand des Energieverteilungsnetzes geschätzt werden kann.

Die Erfindung löst diese Aufgabe durch ein Verfahren gemäß Anspruch 1.

Es ist eine Grundidee der Erfindung, ein künstliches neuronales Netz mit einem analytischen Optimierungsverfahren zu kombinieren, um die Berechnung der Ergebnisse zu beschleunigen. Es ist dabei ein wesentlicher Vorteil der Erfindung, dass Ergebnisse für die Vorhersage zu jedem Zeitpunkt im Zeitfenster bereitgestellt werden können, bevor der nächste Zeitpunkt erreicht wird. Beispielsweise kann bei einem zeitlichen Abstand der Zeitpunkte von 15 Minuten ein Ergebnis in weniger als 15 Minuten erzielt werden, so dass zum nächsten Zeitpunkt wieder eine neue Iteration der Berechnung für das Zeitfenster angestoßen werden kann (weil die Rechenleistung zu diesem Zeitpunkt schon wieder freigegeben ist). Ein weiterer Vorteil ist, dass Rechenleistung bzw. CPU-Nutzungszeit nicht eingesetzt wird, um im vollen Umfang wie bisher aus analytischen Berechnungen für jeden Zeitpunkt sehr ähnliche Ergebnisse zu berechnen. Ferner werden keine neuen Hardware-Komponenten benötigt, d.h. kein massiver Ausbau der Rechenleistung einer zentralen Rechneranordnung der Leistelle ist erforderlich. Dies spart Kosten, Bauraum und Betriebskosten wie Stromkosten ein. Außerdem wird keine komplexe Softwarearchitektur benötigt.

Ein Netzzustand im Sinne der Erfindung umfasst beispielsweise eine Angabe über den Spannungsbetrag bzw. eine elektrische Spannung und den Spannungswinkel bzw. Phasenwinkel an jedem Netzwerkabschnitt. Ein Netzwerkabschnitt wird z.B. auch als "network bus" im Sinne des "bus-branch"-Modells bezeichnet. Er fungiert als ein Netzmodell-Verbindungspunkt, an dem modellierte Betriebsmittel des elektrischen Netzes wie Leitungen, Transformatoren, Verbraucher und Erzeuger elektrischer Energie verknüpft sein können.

Eine zentrale Rechneranordnung weist beispielsweise Prozessoren, Datenspeicher und Bildschirme auf. Der Begriff zentral zielt dabei darauf ab, dass alle wesentlichen Messdaten aus dem Energienetz und alle wesentlichen Steuerbefehle für das Energienetz zentral verarbeitet werden. Die zentrale Rechneranordnung kann dabei mehrere Rechnerkomponenten aufweisen, die unterschiedliche Funktionen ausführen. Es kann z.B. eine Zustandsschätzungseinrichtung für eine Vorhersage eines zukünftigen Netzzustands vorgesehen sein sowie eine erste und eine zweite Vorhersageeinrichtung, die unterschiedliche Verfahren bzw. Algorithmen zur Zustandsschätzung einsetzen.

Auch eine teilweise oder vollständige Ausbildung der Rechneranordnung bzw. der Leitstellensoftware als eine Cloud-Applikation, also eine Serveranordnung mit dezentral verteilten Ressourcen zur Datenverarbeitung und Datenspeicherung, die über ein Datennetzwerk wie z.B. das Internet verbunden sind, kann vorgenommen werden.

Ein Spannungs-Blindleistungs-Kontrollverfahren ist z.B. eine sogenannte Volt-Var-Control für Leitstellensysteme. Die Kontrolle von Spannung und Blindleistung in einem Energienetz ist unter dem Begriff "Volt-VAr-Control" seit langem bekannt und beispielsweise auf Wikipedia beschrieben (permanenter Link: https://en.wikipedia.org/w/index.php?title=Distribution_manag ement_system&oldid=791344005). Im Wesentlichen werden Stufenschalter für Transformatoren, Spannungsregler und Kondensatorbänke gesteuert. Kondensatorbänke können zur Einspeisung von Blindleistung ins Netz verwendet werden und sind daher besonders für eine Volt-VAr Kontrolle geeignet.

Ein Neuronales-Netzwerk-Verfahren ist im Sinne der Erfindung ein Verfahren des maschinellen Lernens, bei dem anhand von Trainingsdaten ein neuronales Netz angelernt wird, auf einen Input einen geeigneten Output zu liefern, d.h. zum Beispiel anhand von Messdaten eine Vorhersage eines zukünftigen Netzzustands zu liefern.

Ein Zeitfenster ist z.B. ein Zeitraum in der Zukunft, der sich vom gegenwärtigen Zeitpunkt für mehrere Stunden in die Zukunft erstreckt, also z.B. von jetzt an die nächsten 24 Stunden umfasst. Die mehreren Zeitpunkte innerhalb des vorgegebenen Zeitfensters können z.B. gleichmäßig voneinander beabstandet sein, also z.B. alle 15 Minuten auftreten.

Messeinrichtungen können beispielsweise Spannungsmessgeräte, Strommessgeräte, Phasenmessgeräte bzw. "Phasor measurement units (PMUs)", "Remote Terminal Units" oder Intelligente Stromzähler bzw. "Smart Meter", "Intelligent electrical devices (IEDs)" zur Überwachung von Schaltern und anderen Betriebsmitteln, Steuereinrichtungen z.B. für Intelligente Substations oder Schutzgeräte sein. Die Datenübertragung der Messdaten kann dabei z.B. nach dem IEC 61850 Protokoll oder nach dem Internet-Protokoll erfolgen. Es können per Powerline-Communication über das Stromnetz, oder per Funk z.B. per LTE (4G) oder per Kabel wie z.B. Ethernet oder Lichtwellenleiter Daten übertragen werden. Messwerte können somit z.B. Spannungswerte, Stromstärkewerke, usw. umfassen.

Maßnahmen dienen z.B. dazu, Grenzwertverletzungen zu vermeiden. Beispielsweise kann ein vorgegebenes Spannungsband von +/- 10% um die vorgesehene Nennspannung mit einem oberen und einem unteren Grenzwert versehen sein. Über- oder unterschreitet die vorhergesagte Spannung diese Grenzwerte oder droht gar ein Stromausfall, so muss entsprechend in der Gegenwart eine Maßnahme ergriffen werden. Beispielsweise kann ein vorgegebenes Frequenzband von +/- 1% um die vorgesehene Nennfrequenz mit einem oberen und einem unteren Grenzwert versehen sein.

Eine Maßnahme im Sinne der Erfindung ist beispielsweise eine Reduktion des Verbrauchs eines einzelnen Verbrauchers oder einer Verbrauchergruppe oder eine Reduktion der Einspeiseleistung eines Energieerzeugers oder einer Gruppe von Energieerzeugern oder eine Änderung eines Fahrplans für einen Verbraucher oder Erzeuger elektrischer Energie. Beispielsweise können entsprechende Steuerbefehle über Sollwerte an entsprechende Betriebsmittel im Energienetz gesendet werden.

In einer bevorzugten Ausführungsform des erfindungsgemäßen Verfahrens wird für das Energieverteilungsnetz zumindest teilweise ein Hochspannungsnetz verwendet. Ein Hochspannungsnetz weist z.B. eine Nennspannung von über 52 kV auf.

In einer weiteren bevorzugten Ausführungsform des erfindungsgemäßen Verfahrens wird für das Energieverteilungsnetz zumindest teilweise ein Mittelspannungsnetz verwendet. Ein Mittelspannungsnetz weist z.B. eine Nennspannung von über 1 kV bis 52 kV auf.

In einer bevorzugten Ausführungsform des erfindungsgemäßen Verfahrens wird für das Energieverteilungsnetz zumindest teilweise ein Niederspannungsnetz verwendet. Ein Niederspannungsnetz weist z.B. eine Nennspannung von unter 1 kV auf. Dies ist ein Vorteil, weil die Vorhersage des Netzzustands aufgrund der Vielzahl von Energieverbrauchern und Erzeugern auf dieser Spannungsebene besonders problematisch ist.

In einer weiteren bevorzugten Ausführungsform des erfindungsgemäßen Verfahrens weist die Vorhersage durchschnittlich höchstens eine Abweichung von 10 % vom später tatsächlich festgestellten Netzzustand auf. Die Abweichung von durchschnittlich höchstens 10% ist dabei beispielsweise als ein sog. "mean average percentage error (MAPE)" von 10% zu verstehen.

In einer weiteren bevorzugten Ausführungsform des erfindungsgemäßen Verfahrens werden die Messeinrichtungen zumindest teilweise in Substations angeordnet. Eine Substation ist dabei im Sinne der Erfindung ein Unterwerk bzw. eine Ortsnetztransformatorenstation. Diese Ausführungsform hat den Vorteil, dass die Messungen einer Substation bereits eine Summe der Einflüsse zahlreicher Verbraucher und Erzeuger elektrischer Energie angeben, so dass insgesamt mit einem weniger fehlerbehafteten Verfahren zu rechnen ist als bei einer Berücksichtigung jeder einzelnen Anschlussstelle eines Erzeugers oder Verbrauchers an einem Netzwerkabschnitt.

In einer weiteren bevorzugten Ausführungsform des erfindungsgemäßen Verfahrens wird für die Vorhersage eine Netzlast ermittelt. Dies ist ein Vorteil, weil die Netzlast unmittelbar einen Einfluss auf die Netzstabilität hat, d.h. auf die Einhaltung von Spannungswerten und Frequenzwerten, die für einen ordnungsgemäßen Betrieb des Energienetzes erforderlich sind.

In einer weiteren bevorzugten Ausführungsform des erfindungsgemäßen Verfahrens wird für die Vorhersage eine Energieerzeugung durch Erzeuger erneuerbarer Energie ermittelt. Dies ist ein Vorteil, weil die Einspeisung durch Erzeuger erneuerbarer elektrischer Energie sehr volatil ist und unmittelbar einen Einfluss auf die Netzstabilität hat, d.h. auf die Einhaltung von Spannungswerten und Frequenzwerten, die für einen ordnungsgemäßen Betrieb des Energienetzes erforderlich sind.

Die Netzlast und/oder die Energieerzeugung durch Erzeuger erneuerbarer Energie ermöglichen es, im Voraus abzuschätzen, ob beispielsweise elektrische Energie zu einem zukünftigen Zeitpunkt innerhalb der nächsten 24 Stunden zugekauft oder verkauft werden muss. Alternativ kann auch eine Erzeugung elektrischer Energie gedrosselt oder erhöht werden. Ferner kann auch ein Verbrauch elektrischer Energie zu dem notwendigen Zeitpunkt durch Einflussnahme auf steuerbare Verbraucher gesenkt oder erhöht werden.

In einer weiteren bevorzugten Ausführungsform des erfindungsgemäßen Verfahrens werden für das vorgegebene Zeitfenster mehrere Stunden der Zukunft berücksichtigt, wobei die mehreren Zeitpunkte jeweils zwischen 3 und 60 Minuten zeitlich beabstandet werden. Durch eine Auswahl der zeitlichen Auflösung kann u.a. sichergestellt werden, dass zum nächsten Zeitpunkt bereits wieder die für die nächste Iteration benötigte Rechenleistung freigegeben wurde.

In einer weiteren bevorzugten Ausführungsform des erfindungsgemäßen Verfahrens werden für das vorgegebene Zeitfenster 24 Stunden der Zukunft berücksichtigt, wobei die mehreren Zeitpunkte jeweils 15 Minuten zeitlich beabstandet werden. Diese Konstellation ist besonders wichtig, weil sie von vielen Betreibern gefordert wird.

In einer weiteren bevorzugten Ausführungsform des erfindungsgemäßen Verfahrens werden mittels einer ersten Trainingseinrichtung Trainingsdaten erstellt, wobei mehrere Verletzungen vorgegebener Schwellenwerte für Messwerte des elektrischen Energieverteilungsnetzes simuliert werden, und anhand der Trainingsdaten mittels der ersten Vorhersageeinrichtung ein erster Vorhersage-Trainings-Datensatz ermittelt wird. Mit anderen Worten werden anhand einer virtuellen Nachbildung des zu kontrollierenden Energienetzes viele unterschiedliche problematische Szenarien vorberechnet, um ein großes Ensemble an unterschiedlichen Betriebssituationen bereit zu stellen.

In einer weiteren bevorzugten Ausführungsform des erfindungsgemäßen Verfahrens wird anhand der Trainingsdaten mittels der zweiten Vorhersageeinrichtung ein zweiter Vorhersage-Trainings-Datensatz ermittelt, und es wird mittels einer Vergleichseinrichtung ein Unterschiedlichkeitswert für einen Unterschied zwischen dem ersten und dem zweiten Vorhersage-Trainings-Datensatz ermittelt, wobei im dem Fall, dass der Unterschiedlichkeitswert einen vorher festgelegten Schwellenwert überschreitet, mittels einer zweiten Trainingseinrichtung ein Neuronales-Netzwerk für die zweiten Vorhersageeinrichtung derart trainiert wird, dass der Unterschiedlichkeitswert verringert wird. Mit anderen Worten wird der in der vorgenannten Ausführungsform ermittelte Vorhersage-Trainings-Datensatz benutzt, um ein neuronales Netzwerk anhand der vielen simulierten unterschiedlichen Betriebssituationen dahingehend zu trainieren, dass es vergleichbare Ergebnisse zur Simulation liefert. Dies ist ein Vorteil der Erfindung, denn es wird sichergestellt, dass das neuronale Netz brauchbare, d.h. in der Realität vorkommende, Situationen ausreichend genau vorhersagen kann. Ziel des Trainings ist, dass der Unterschiedlichkeitswert nach dem Training des neuronalen Netzwerks bei einem neunen Durchlauf den Schwellenwert unterschreitet, d.h. ausreichend ähnlich ist. Um dies zu erreichen, können Parameter des neuronalen Netzes probeweise verändert werden und mit dem geänderten Netz getestet werden, ob sich der Unterschiedlichkeitswert verringert.

Ferner stellt sich an die Erfindung, ausgehend von bekannten zentralen Rechneranordnungen zur Vorhersage eines Netzzustands eines elektrischen Energieverteilungsnetzes, die Aufgabe, eine zentrale Rechneranordnung anzugeben, mit der vergleichsweise einfach und schnell ein zukünftiger Systemzustand des Energieverteilungsnetzes geschätzt werden kann.

Die Erfindung löst diese Aufgabe durch eine zentrale Rechneranordnung gemäß Anspruch 10. Bevorzugte Ausführungsformen ergeben sich aus den Unteransprüchen 11 bis 15. Es ergeben sich dabei sinngemäß die gleichen Vorteile wie eingangs für das erfindungsgemäße Verfahren erläutert.

Ausgehend von bekannten Verfahren zur Vorhersage eines Netzzustands eines elektrischen Energieverteilungsnetzes stellt sich an die Erfindung die Aufgabe, ein Computerprogrammprodukt anzugeben, mit dem vergleichsweise einfach und schnell ein zukünftiger Systemzustand des Energieverteilungsnetzes geschätzt werden kann.

Die Erfindung löst diese Aufgabe durch ein Computerprogrammprodukt gemäß Anspruch 15. Es ergeben sich dabei sinngemäß die gleichen Vorteile wie eingangs für das erfindungsgemäße Verfahren erläutert.

Zur besseren Erläuterung der Erfindung zeigen in schematischer Darstellung die
- Figur 1: ein Beispiel für eine Architektur eines neuronalen Netzes, und
- Figur 2: einen Ansatz für eine Erstellung von Trainingsdaten, und
- Figur 3: ein Beispiel für ein Training eines neuronalen Netzes mit Trainingsdaten, und
- Figur 4: ein Beispiel für eine Vorhersage eines Netzzustands, und
- Figur 5: ein Ausführungsbeispiel einer zentralen Rechneranordnung.

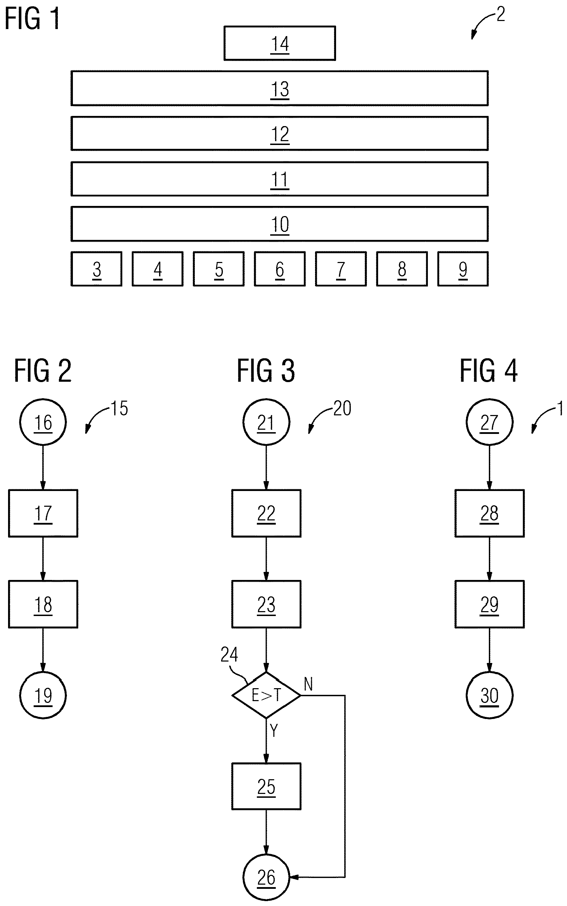

Die Figur 1 zeigt ein einfaches Beispiel für eine SoftwareArchitektur eines Neuronalen-Netzwerk-Verfahrens, wie es in der zweiten Vorhersageeinrichtung einsetzbar ist. Es werden Eingabewerte 3-9 an eine erste Schicht 10 des neuronalen Netzwerks übergeben. Die Verarbeitung erfolgt unter Zuhilfenahme weiterer Schichten 11-13. Schließlich werden Ausgabegrößen 14 bereitgestellt.

Eingabewerte sind z.B.:
Grenzwertverletzungen 3 für Leistungen oder Spannungen, die von fernüberwachten Transformatoren übermittelt werden,
Initiale Kontrollpositionen 4 für steuerbare Betriebsmittel wie Stufenschalter von Transformatoren oder Schaltgeräte,
Summe injizierter Blindleistung 5 durch Kondensatoren,
Summe der Leistung 6 der Last,
Summe der Blindleistung 7 der Last,
Summe der Energieerzeugung 8,
Summe der Blindleistung durch Energieerzeuger 9.

Ausgabegrößen 14 umfassen z.B. alle finalen Kontrollpositionen für steuerbare Betriebsmittel wie z.B. wie Stufenschalter von Transformatoren oder Schaltgeräte.

Die Figur 2 zeigt ein Beispiel für ein Verfahren 15 zum Erstellen von Trainingsdaten für das neuronale Netz nach Figur 1. Nach dem Startschritt 16 werden im Simulationsschritt 17 mehrere Verletzungen vorgegebener Schwellenwerte für Messwerte des elektrischen Energieverteilungsnetzes simuliert und als Trainingsdaten bereitgestellt. Im Schritt 18 werden die Trainingsdaten mittels eines analytischen Verfahrens wie z.B. Volt-Var-Control in der ersten Vorhersageeinrichtung verarbeitet. Im Schritt 19 werden die Eingangswerte für das Analytische Verfahren, also die Trainingsdaten mit Messwerten und Grenzwertverletzungen, sowie die Ausgabewerte des Analytischen Verfahrens, also jeweils ein geschätzter Netzzustand, als ein erster Vorhersage-Trainings-Datensatz bereitgestellt.

Die Figur 3 zeigt ein Beispiel für ein Verfahren 20 für das Trainieren des neuronalen Netzes 15 nach Figur 1. Nach dem Startschritt 21 werden im ersten Vorhersageschritt 22 anhand der Trainingsdaten ein erster Vorhersage-Trainings-Datensatz ermittelt, der auch Ausgabewerte des Analytischen Verfahrens beinhaltet. Es kann dieser Schritt auch übersprungen werden, wenn bereits in Schritt 18 der Figur 2 ein Netzzustand mittels eines analytischen Verfahrens geschätzt wurde.

Im zweiten Vorhersageschritt 23 wird ein zweiter Vorhersage-Trainings-Datensatz ermittelt, wobei das neuronale Netz aus Figur 1 verwendet wird. Dabei werden exakt die gleichen Eingangswerte aus den Trainingsdaten genutzt wie zuvor für das analytische Verfahren.

Im Vergleichsschritt 24 wird ein Unterschiedlichkeitswert E für einen Unterschied zwischen dem ersten und dem zweiten Vorhersage-Trainings-Datensatz ermittelt. In dem Fall, dass der Unterschiedlichkeitswert E einen vorher festgelegten Schwellenwert T überschreitet, d.h., eine zu große Abweichung zwischen beiden geschätzten Netzzuständen vorliegt, wird entsprechend der Entscheidung Y das Neuronale Netzwerk im Schritt 25 dahingehend trainiert, dass der Schwellenwert T unterschritten wird. In dem Fall, dass der Unterschiedlichkeitswert E den Schwellenwert T nicht überschreitet, d.h., keine zu große Abweichung zwischen beiden geschätzten Netzzuständen vorliegt, wird entsprechend der Entscheidung N direkt zum Schlussschritt 26 vorgegangen.
Das Verfahren 20 ermöglicht es, insbesondere bei iterativem Wiederholen mit vielen unterschiedlichen Trainingsdaten, das neuronale Netzwerk dahingehend zu trainieren, dass es einen sehr ähnlichen Output zu dem Output des analytischen Verfahrens liefert. Dabei ist das neuronale Netz jedoch sehr viel schneller in der Lage, einen Netzzustand zu schätzen, als das analytische Verfahren für die Berechnung eines Netzzustands benötigt.

Figur 4 zeigt ein Beispiel für eine Vorhersage eines Netzzustands mit dem erfindungsgemäßen Verfahren 1. Nach dem Startschritt 27 wird im Schritt 28 eine Vorhersage eines zukünftigen Netzzustands durchgeführt. Es werden anhand der Vorhersage des zukünftigen Netzzustands Maßnahmen zur Sicherstellung einer Stabilität des Energieverteilungsnetzes ermittelt. Die Vorhersage wird für Zeitpunkte 0 bis 64, d.h., für ein vorgegebenes Zeitfenster von 12 Stunden in der Zukunft bei einem zeitlichen Abstand der Zeitpunkte von 15 Minuten, vorgenommen und mittels Volt-Var-Control ermittelt. Es kommt also für die Vorhersage der ersten 16 Stunden ein analytisches Verfahren zu Einsatz.

Anschließend wird im Schritt 29 eine Vorhersage für weitere Zeitpunkte 65 bis 96 anhand des zuvor trainierten Neuronalen-Netzwerk-Verfahrens ermittelt. Es kommt also für die letzten 8 Stunden ein maschinelles Lernen zu Einsatz, um den zukünftigen Netzzustand zu schätzen.

Im Schritt 30 werden vorhergesagte Netzzustände für alle 96 Zeitpunkte, d.h. für 24 Stunden im Voraus, bereitgestellt.

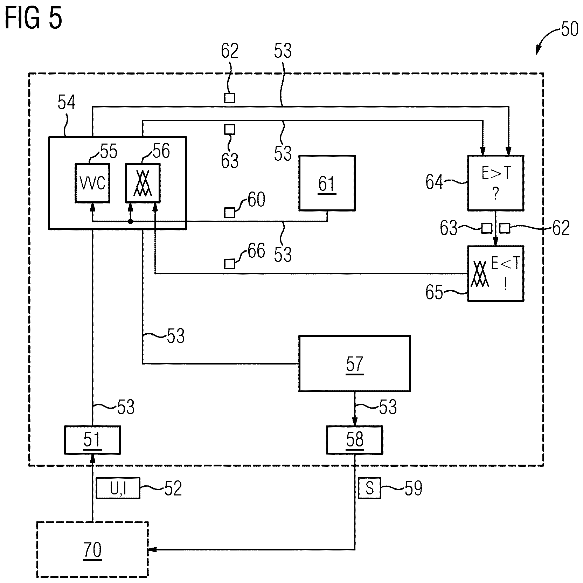

Figur 5 zeigt ein Ausführungsbeispiel einer zentralen Rechneranordnung 50 zur Vorhersage eines Netzzustands eines elektrischen Energieverteilungsnetzes 70. Aus dem Energieverteilungsnetz 70 werden Messwerte, z.B. Spannungswerte U und Stromstärkewerte I, als Datentelegramme 52 an eine Empfangseinrichtung 51 gesendet. Eine Zustandsschätzungseinrichtung 54 ist über eine Datenkommunikationsverbindung 53 angeschlossen und ausgebildet, eine Vorhersage eines zukünftigen Netzzustands durchzuführen. Die Vorhersage wird über eine Datenkommunikationsverbindung 53 an eine Kontrolleinrichtung 57 übermittelt, die anhand der Vorhersage des zukünftigen Netzzustands Maßnahmen zur Sicherstellung einer Stabilität des Energieverteilungsnetzes ermittelt. Die Maßnahmen werden über eine Datenkommunikationsverbindung 53 an eine Sendeeinrichtung 58 übermittelt, die zur Umsetzung der Maßnahmen geeignete Steuerbefehle S für steuerbare Betriebsmittel im Energieverteilungsnetz 70 erstellt und als Datentelegramme 59 versendet.

Erfindungsgemäß weist die Zustandsschätzungseinrichtung 54 eine erste Vorhersageeinrichtung 55 auf, die ausgebildet ist, eine Vorhersage für einen ersten Teil der mehreren Zeitpunkte zu erstellen. Dies können wie im eingangs erwähnten Beispiel die ersten 64 Zeitpunkte innerhalb von 16 Stunden sein. Die erste Vorhersageeinrichtung 55 nutzt ein Spannungs-Blindleistungs-Kontrollverfahrens (WC), d.h. ein analytisches Verfahren.

Eine zweite Vorhersageeinrichtung 56 ist ausgebildet, eine Vorhersage für einen zweiten Teil der mehreren Zeitpunkte anhand eines Neuronalen-Netzwerk-Verfahrens zu ermitteln. Dies können wie im eingangs erwähnten Beispiel die letzten 32 Zeitpunkte innerhalb von 8 Stunden sein am Ende des Zeitfensters von 24 Stunden sein.

Damit dies funktioniert, muss zunächst das Neuronale-Netzwerk-Verfahren der zweiten Vorhersageeinrichtung 56 trainiert werden, sehr ähnliche Ergebnisse wie das analytische Verfahren der ersten Vorhersageeinrichtung 55 zu liefern.

Hierfür ist eine erste Trainingseinrichtung 61 ausgebildet, Trainingsdaten 60 zu erstellen, wobei mehrere Verletzungen vorgegebener Schwellenwerte für Messwerte des elektrischen Energieverteilungsnetzes simuliert werden.

Die erste Vorhersageeinrichtung 55 ermittelt anhand der Trainingsdaten 60 einen ersten Vorhersage-Trainings-Datensatz 62. Die zweite Vorhersageeinrichtung 56 ermittelt anhand der gleichen Trainingsdaten 60 einen zweiten Vorhersage-Trainings-Datensatz 63. Beide Vorhersage-Trainings-Datensatz 62,63 werden an eine Vergleichseinrichtung 64 übermittelt.

Diese bestimmt einen Unterschiedlichkeitswert E für einen Unterschied zwischen dem ersten und dem zweiten Vorhersage-Trainings-Datensatz 62,63. In dem Fall, dass der Unterschiedlichkeitswert E einen vorher festgelegten Schwellenwert T überschreitet, wird an eine zweite Trainingseinrichtung 65 der Auftrag gegeben, das Neuronale-Netzwerk für die zweite Vorhersageeinrichtung derart zu trainieren, dass der Unterschiedlichkeitswert verringert wird. Das trainierte Neuronale Netzwerk 66 wird an die zweite Vorhersageeinrichtung 56 übermittelt.

## Patentansprüche

1. Verfahren (1) zur Vorhersage eines Netzzustands eines elektrischen Energieverteilungsnetzes (70), bei dem
mittels einer zentralen Rechneranordnung (50) Messwerte (52) von Messeinrichtungen empfangen werden, und
mittels einer Zustandsschätzungseinrichtung (54) eine Vorhersage eines zukünftigen Netzzustands durchgeführt wird, wobei anhand der Vorhersage des zukünftigen Netzzustands Maßnahmen (59) zur Sicherstellung einer Stabilität des Energieverteilungsnetzes (70) ermittelt werden, und wobei
die Vorhersage für mehrere Zeitpunkte innerhalb eines vorgegebenen Zeitfensters erfolgt,
**dadurch gekennzeichnet, dass**
mittels einer ersten Vorhersageeinrichtung (55) eine Vorhersage für einen ersten Teil der mehreren Zeitpunkte anhand eines Spannungs-Blindleistungs-Kontrollverfahrens (VVC) ermittelt wird, und dass
mittels einer zweiten Vorhersageeinrichtung (56) eine Vorhersage für einen zweiten Teil der mehreren Zeitpunkte anhand eines Neuronalen-Netzwerk-Verfahrens ermittelt wird.

2. Verfahren (1) nach Anspruch 1, **dadurch gekennzeichnet, dass** für das Energieverteilungsnetz (70) zumindest teilweise ein Hochspannungsnetz verwendet wird.

3. Verfahren (1) nach Anspruch 1, **dadurch gekennzeichnet, dass** für das Energieverteilungsnetz (70) zumindest teilweise ein Mittelspannungsnetz verwendet wird.

4. Verfahren (1) nach einem der vorhergehenden Ansprüche, **dadurch gekennzeichnet, dass** für die Vorhersage eine Netzlast ermittelt wird.

5. Verfahren (1) nach einem der vorhergehenden Ansprüche, **dadurch gekennzeichnet, dass** für die Vorhersage eine Energieerzeugung durch Erzeuger erneuerbarer Energie ermittelt wird.

6. Verfahren (1) nach einem der vorhergehenden Ansprüche, **dadurch gekennzeichnet, dass** für das vorgegebene Zeitfenster mehrere Stunden der Zukunft berücksichtigt werden, wobei die mehreren Zeitpunkte jeweils zwischen 3 und 60 Minuten zeitlich beabstandet werden.

7. Verfahren (1) nach Anspruch 6, **dadurch gekennzeichnet, dass** für das vorgegebene Zeitfenster 24 Stunden der Zukunft berücksichtigt werden, wobei die mehreren Zeitpunkte jeweils 15 Minuten zeitlich beabstandet werden.

8. Verfahren (1) nach einem der vorhergehenden Ansprüche, **dadurch gekennzeichnet, dass** mittels einer ersten Trainingseinrichtung (61) Trainingsdaten erstellt werden, wobei mehrere Verletzungen vorgegebener Schwellenwerte für Messwerte des elektrischen Energieverteilungsnetzes (70) simuliert werden, und
anhand der Trainingsdaten (60) mittels der ersten Vorhersageeinrichtung (55) ein erster Vorhersage-Trainings-Datensatz (62) ermittelt wird.

9. Verfahren (1) nach Anspruch 8, **dadurch gekennzeichnet, dass**
anhand der Trainingsdaten (60) mittels der zweiten Vorhersageeinrichtung (56) ein zweiter Vorhersage-Trainings-Datensatz (63) ermittelt wird, und dass
mittels einer Vergleichseinrichtung (64) ein Unterschiedlichkeitswert (E) für einen Unterschied zwischen dem ersten und dem zweiten Vorhersage-Trainings-Datensatz (62,63) ermittelt wird, wobei
im dem Fall, dass der Unterschiedlichkeitswert (E) einen vorher festgelegten Schwellenwert (T) überschreitet, mittels einer zweiten Trainingseinrichtung (65) ein Neuronales-Netzwerk (66) für die zweiten Vorhersageeinrichtung (56) derart trainiert wird, dass der Unterschiedlichkeitswert (E) verringert wird.

10. Zentrale Rechneranordnung (50) zur Vorhersage eines Netzzustands eines elektrischen Energieverteilungsnetzes (70), aufweisend:
eine Empfangseinrichtung (51), die ausgebildet ist, Messwerte (52) von Messeinrichtungen zu empfangen, und
eine Zustandsschätzungseinrichtung (54), die ausgebildet ist,
eine Vorhersage eines zukünftigen Netzzustands durchzuführen,
wobei anhand der Vorhersage des zukünftigen Netzzustands Maßnahmen (59) zur Sicherstellung einer Stabilität des Energieverteilungsnetzes (70) ermittelt werden, und wobei die Vorhersage für mehrere Zeitpunkte innerhalb eines vorgegebenen Zeitfensters erfolgt,
**dadurch gekennzeichnet, dass**
eine erste Vorhersageeinrichtung (55) ausgebildet ist, eine Vorhersage für einen ersten Teil der mehreren Zeitpunkte anhand eines Spannungs-Blindleistungs-Kontrollverfahrens (VVC) zu ermitteln, und dass
eine zweite Vorhersageeinrichtung (56) ausgebildet ist, eine Vorhersage für einen zweiten Teil der mehreren Zeitpunkte anhand eines Neuronalen-Netzwerk-Verfahrens zu ermitteln.

11. Zentrale Rechneranordnung (50) nach Anspruch 10, **dadurch gekennzeichnet, dass** die Zustandsschätzungseinrichtung (54) ausgebildet ist, für die Vorhersage eine Netzlast zu ermitteln.

12. Zentrale Rechneranordnung (50) nach Anspruch 10 oder 11, **dadurch gekennzeichnet, dass** die Zustandsschätzungseinrichtung (54) ausgebildet ist, für die Vorhersage eine Energieerzeugung durch Erzeuger erneuerbarer Energie zu ermitteln.

13. Zentrale Rechneranordnung (50) nach einem der Ansprüche 10 bis 12, **dadurch gekennzeichnet, dass** eine erste Trainingseinrichtung (61) ausgebildet ist, Trainingsdaten (60) zu erstellen, wobei mehrere Verletzungen vorgegebener Schwellenwerte für Messwerte des elektrischen Energieverteilungsnetzes (70) simuliert werden, und
anhand der Trainingsdaten (60) mittels der ersten Vorhersageeinrichtung (55) ein erster Vorhersage-Trainings-Datensatz (62) ermittelt wird.

14. Zentrale Rechneranordnung (50) nach einem der Ansprüche 10 bis 13, **dadurch gekennzeichnet, dass**
die zweite Vorhersageeinrichtung (56) ausgebildet ist, anhand der Trainingsdaten (60) einen zweiten Vorhersage-Trainings-Datensatz (63) zu ermitteln, und dass
eine Vergleichseinrichtung (64) ausgebildet ist, einen Unterschiedlichkeitswert (E) für einen Unterschied zwischen dem ersten und dem zweiten Vorhersage-Trainings-Datensatz zu (62,63) ermitteln, und dass
eine zweite Trainingseinrichtung (65) ausgebildet ist, im dem Fall, dass der Unterschiedlichkeitswert (E) einen vorher festgelegten Schwellenwert (T) überschreitet, ein Neuronales-Netzwerk (66) für die zweite Vorhersageeinrichtung (56) derart zu trainieren, dass der Unterschiedlichkeitswert (E) verringert wird.

15. Computerprogrammprodukt, das auf einem dauerhaften Datenspeichermedium speicherbar ist und bei Ausführung auf einem Computer ein Verfahren gemäß einem der Ansprüche 1 bis 9 durchführt.
